# EUROPÄISCHE PATENTSCHRIFT

(11) **EP 1 857 319 B1**
(45) Veröffentlichungstag und Bekanntmachung des Hinweises auf die Patenterteilung: **26.09.2012**
(21) Anmeldenummer: 07107727.5
(22) Anmeldetag: 08.05.2007
(51) Int. Cl.: B60N 2/16

(54) **Vorrichtung für eine Sitzhöhen-Verstelleinrichtung eines Fahrzeugsitzes sowie ausgestatteter Fahrzeugsitz**
Device for adjusting the seating height of a passenger seat and passenger seat equipped therewith
Dispositif destiné au réglage en hauteur de l'assise d'un siège de véhicule et siège de véhicule équipé de celui-ci

(30) Priorität: 16.05.2006 DE 102006022767
(43) Veröffentlichungstag der Anmeldung: 21.11.2007
(73) Patentinhaber: GRAMMER AG, 92224 Amberg (DE)
(72) Erfinder: Lorey, Konstantin, 92546 Schmidgaden (DE)
(74) Vertreter: Hannke, Christian

(56) Entgegenhaltungen:
- DE-A1- 4 008 438
- DE-A1- 10 338 305
- DE-U1- 20 220 201
- GB-A- 1 060 922

## Beschreibung

Die Erfindung betrifft einen Fahrzeugsitz mit einer Vorrichtung für eine Sitzhöhen-Verstelleinrichtung dieses Fahrzeugsitzes sowie eine Vorrichtung für eine Verstelleinrichtung für einen Fahrzeugsitz.

Aus der DE 32 03 151 A1 ist bereits eine Vorrichtung für eine Verstelleinrichtung eines Fahrzeugsitzes bekannt, die ein in entgegengesetzten Drehrichtungen antreibbares Antriebselement und ein mittels dieses Antriebselements antreibbares, in entgegengesetzten Drehrichtungen verschwenkbares Abtriebselement aufweist. Bei der dort vorgeschlagenen Vorrichtung sind zwischen dem Antriebselement und dem Abtriebselement zwei einseitig wirkende Freiläufe vorgesehen, die derart gegenläufig verschaltet sind, dass die Sperrrichtung des ersten dieser Freiläufe der Freilaufrichtung des zweiten dieser Freiläufe entspricht, und dass die Sperrrichtung des zweiten dieser Freiläufe der Freilaufrichtung des ersten dieser Freiläufe entspricht. Den Freiläufen ist dabei eine gemeinsame entlang einer Kreisbahn angeordnete (innen-)Verzahnung (Raste) zugeordnet.

Jeder der einseitig wirkenden Freiläufe weist eine (separate) Rast- bzw. Sperrklinke auf, die schwenkbar an einem jeweiligen, am Antriebselement fixierten Lagerbolzen gehalten ist und die federbelastet gegen die Verzahnung gedrückt ist. Die zu diesem Zweck vorgesehene Feder ist als als Zugfeder wirkende Spiralfeder gestaltet, die mit ihren distalen Enden einerseits in die Klinke des ersten Freilaufs und andererseits in die Klinke des zweiten Freilaufs eingreift.

Für die Relativverdrehung des Abtriebselements gegenüber dem Antriebselement ist bei der aus der DE 32 03 151 A1 bekannten Gestaltung eine Entriegelungseinrichtung zum wahlweisen Außereingriff-Bringen jeweils eines der Freiläufe vorgesehen. Diese Entriegelungseinrichtung wird mittels eines im Wesentlichen halb-hohlzylindrischen Kragens ausgebildet, der sich an einem als antreibende Betätigungseinrichtung für das Antriebselement dienenden, drehbar gelagerten Handrad erstreckt. Bei einer äußeren auf das Handrad wirkenden Drehmomentbelastung um dessen Drehachse belastet der genannte Kragen wahlweise und durch die Orientierung der Drehmomentbelastung bestimmt jeweils eine der Sperrklinken derart, dass sie bzw. der Freilauf, dessen Bestandteil sie ist, außer Eingriff kommt und bei fortgesetzter Drehmomentbelastung des Handrades bei unveränderter Orientierung an einen am Antriebselement fixierten Bolzen, der von den vorgenannten Bolzen verschieden ist, anschlägt, so dass das von außen drehmomentbelastete Handrad fortan über den Eingriff seines Kragens in die betreffende Klinke und deren Kopplung mit dem am Antriebselement fixierten Anschlagbolzen das Antriebselement drehend antreibt. Das Antriebselement nimmt dabei wiederum über den anderen, nach wie vor sich im Eingriff befindenden einseitig wirkenden Freilauf das Abtriebselement drehend mit, an dem die Verzahnung der beiden Freiläufe ausgebildet ist.

Zum Verschwenken des Abtriebselements in der entgegengesetzten Orientierung kann das Handrad in der ebenfalls entgegengesetzten Orientierung mit einem Drehmoment belastet werden. Ausgehend von der dabei durchlaufenen Stellung, in der beide Freiläufe wieder im Eingriff sind, drehen sich die zuvor geschilderten Verhältnisse entsprechend um, so dass der Freilauf, der nach der vorstehenden Schilderung außer Eingriff gebracht wurde, im Eingriff verbleibt und zur Drehmomentübertragung an das Abtriebselement benutzt wird, und entsprechend der andere Freilauf mittels des Kragens außer Eingriff gebracht wird.

Anzumerken ist, dass für den dann außer Eingriff stehenden Freilauf ebenfalls ein Anschlagbolzen der oben genannten Art gegeben ist, um die Drehmomentübertragung vom Handrad auf das Antriebselement in dieser anderen Drehrichtung zu ermöglichen.

Diese aus der DE 32 03 151 A1 bekannte Vorrichtung scheint sich prinzipiell recht gut für Verstelleinrichtungen von Fahrzeugsitzen zu eignen. Nachteilig ist bei dieser Gestaltung allerdings, dass die Feinfühligkeit, mit der sich der Fahrzeugsitz einstellen lässt in hohem Ma-ße von den motorischen Fähigkeiten des Benutzers abhängt.

Aus der DE 4 008 438 A1 ist eine Vorrichtung entsprechend dem Oberbegriff des Anspruchs 1 bekannt.

Die Aufgabe der vorliegenden Erfindung besteht daher darin, eine Vorrichtung für eine Verstelleinrichtung eines Fahrzeugsitzes zu schaffen, die ein feinfühliges Verstellen unterstützt.

Erfindungsgemäß wird nun eine, insbesondere für eine Verstelleinrichtung eines Fahrzeugsitzes bestimmte Vorrichtung gemäß Anspruch 1 vorgeschlagen. Ein erfindungsgemäßer Fahrzeugsitz ist Gegenstand des Anspruches 11. Bevorzugte Weiterbildungen sind Gegenstand der Unteransprüche.

Erfindungsgemäß wird also eine Vorrichtung für eine Sitzhöhen-Verstelleinrichtung eines Fahrzeugsitzes vorgeschlagen. Diese Vorrichtung weist ein in entgegengesetzten Drehrichtungen antreibbares Antriebselement und ein mittels dieses Antriebselements in entgegengesetzten Drehrichtungen antreibbares Abtriebselement auf. Ferner weist diese Vorrichtung einen ersten einseitig wirkenden Freilauf und einen zweiten einseitig wirkenden Freilauf auf. Das Abtriebselement kann vom Antriebselement wahlweise über den ersten oder den zweiten dieser beiden Freiläufe angetrieben werden. Die Sperrrichtung des ersten dieser beiden Freiläufe entspricht der Freilaufrichtung des zweiten dieser beiden Freiläufe und die Freilaufrichtung des ersten dieser beiden Freiläufe entspricht der Sperrrichtung des zweiten dieser beiden Freiläufe.

Ferner weist die Vorrichtung eine Entriegelungseinrichtung zum wahlweisen Außereingriff-Bringen jeweils eines der Freiläufe auf.

Dem Antriebselement ist eine Neutralstellung zugeordnet. Diese Neutralstellung ist insbesondere eine vorbestimmte Drehstellung des Antriebselements, bei der sowohl der erste als auch der zweite Freilauf in einer Eingriffstellung ist. Für das Antriebselement ist eine bei einem Auslenken des Antriebselements in Richtung der Neutralstellung wirkende Rückstelleinrichtung vorgesehen.

Wie angesprochen kann das Antriebselement in zwei entgegengesetzten Drehrichtungen (bzw. Orientierungen) verschwenkt bzw. (drehend bzw. schwenkend) angetrieben werden. Für die Begrenzung der Verschwenkbarkeit des Antriebselements in einer ersten dieser beiden Drehrichtungen (bzw. Orientierungen) ist ein erster Anschlag vorgesehen und für die Begrenzung der Verschwenkbarkeit des Antriebselements in der zweiten dieser beiden Drehrichtungen (bzw. Orientierungen) dieses Antriebselements ist ein zweiter Anschlag vorgesehen.

In vorteilhafter Ausgestaltung ist vorgesehen, dass das Antriebselement ein manuell oder elektromotorisch - gegebenenfalls mittels eines Betätigungsteils - angetriebenes oder antreibbares Teil ist und dass das vom Antriebselement antreibbare bzw. getriebene Abtriebselement eine ausgangsseitige Stellkraft bzw. ein ausgangsseitiges Stellmoment für die Sitzhöhen-Verstelleinrichtung liefert.

Der erste und der zweite Anschlag für das Antriebselement kann beispielsweise an einem Gehäuse bzw. Teil angeordnet sein, das in vorteilhafter Weiterbildung fest mit einem der mittels der Verstelleinrichtung relativ zueinander zu verstellenden Bauteile angeordnet ist. Dieses kann im Falle einer Sitzhöhen-Verstelleinrichtung so sein, dass dieses Gehäuse bzw. Teil fest an einem starren Bauteil der in seiner Höhe gegenüber dem Fahrzeugboden zu verstellenden Sitz, insbesondere Sitzfläche, angeordnet ist, oder so, dass dieses Gehäuse bzw. Bauteil fest mit der Fahrzeugkarosserie bzw. dem Fahrzeugboden, gegenüber dem die Sitzhöhe zu verstellen ist, angeordnet ist.

In vorteilhafter Weiterbildung weist der erste einseitig wirkende Freilauf eine erste Rast- bzw. Sperr- bzw. Ratschenklinke und der zweite einseitig wirkende Freilauf eine davon verschiedene zweite Rast- bzw. Sperr- bzw. Ratschenklinke auf. In zweckmäßiger Ausgestaltung sind die erste und die zweite Klinke dabei federbelastet, und zwar insbesondere so, dass sie jeweils für das Eingreifen in eine Verzahnung, wie Innenverzahnung, zum Sperren in ihrer jeweiligen Sperrrichtung in bzw. in Richtung dieser Verzahnung federbelastet sind. Dabei können für die beiden Klinken jeweils separate Verzahnungen des jeweiligen Freilaufes vorgesehen sein; in besonders vorteilhafter Ausgestaltung ist jedoch eine gemeinsame, für das Zusammenwirken mit beiden Klinken bestimmte Verzahnung vorgesehen, deren Zähne beispielsweise entlang einer Kreisbahn oder eines Abschnitts einer solchen Kreisbahn beabstandet zueinander, und vorzugsweise mit konstanter Teilung, angeordnet sind.

In besonders zu bevorzugender Ausgestaltung ist diese Verzahnung als Innenverzahnung an einem hülseartigen Abschnitt ausgebildet, der in besonders zu bevorzugender Weiterbildung ein Abschnitt des Abtriebselements ist.

Die Klinken sind vorzugsweise jeweils schwenkbar angeordnet, und zwar insbesondere mittels eines jeweiligen Bolzens am Antriebselement. In besonders vorteilhafter Gestaltung erstrecken sich diese Bolzen dabei parallel und beabstandet zur Schwenkachse des Antriebselements, und zwar insbesondere um - bezogen auf die Umfangsrichtung der Schwenkachse des Antriebselements - ca. 120° bis 180°, besonders bevorzugt um ca. 180° oder um 180°, versetzt zueinander. Es kann vorgesehen sein, dass die beiden Klinken von einer gemeinsamen Feder belastet sind, die sich an beiden dieser Klinken abstützt, und vorzugsweise als Druckfeder wirkt.

Die Entriegelungseinrichtung kann beispielsweise einen Kragen aufweisen, der beispielsweise einen Abschnitt eines Hohlzylinders ausbildet. Ein solcher Kragen kann in vorteilhafter Ausgestaltung fest an einem Gehäuse bzw. Teil, wie beispielsweise dem an anderer Stelle dieser Offenbarung erwähnten Gehäuse bzw. Teil, angeordnet sein, bzw. von diesem ausgebildet werden. Dabei kann vorgesehen sein, dass durch eine eingangsseitige Drehmomentbelastung des Antriebselements - in Abhängigkeit von der Orientierung des Drehmoments - die erste oder die zweite Klinke von diesem Antriebselement und über ihren Lagerbolzen gegen jeweils eines der beiden in Umfangsrichtung des Kragens stirnseitigen Enden dieses Kragens derart gedrückt werden, dass der entsprechende Freilauf außer Eingriff kommt.

Die Rückstelleinrichtung ist insbesondere so ausgebildet, dass sie das Antriebselement bei einer schwenkenden Auslenkung aus seiner Neutralstellung in Richtung dieser Neutralstellung belastet bzw. vorspannt, sodass das Antriebselement bei einer Entlastung von einer diese Auslenkung bewirkenden äußeren Belastung, wie beispielsweise manuell von einem Benutzer oder elektromotorisch in das Antriebselement oder ein damit gekoppeltes Betätigungsteil eingeleitete Belastung bzw. Drehmoment, automatisch in seine Neutralstellung zurück verbringt. Dieses erfolgt vorzugsweise so, dass bei diesem bzw. durch dieses "Zurückverbringen" ein mittels der Entriegelungseinrichtung außer Eingriff gebrachter Freilauf wieder in eine Eingriffsstellung bewegt wird. Die Neutralstellung des Antriebselements ist also insbesondere derart, dass beide einseitig wirkenden Freiläufe in dieser Neutralstellung im Engriff sind.

Anhand der Figuren soll im Folgenden ein Ausführungsbeispiel der Erfindung näher erläutert werden. Dabei zeigt:
- Fig. 1: eine beispielhafte erfindungsgemäße Vorrichtung für eine Sitzhöhen-Verstelleinrichtung eines Fahrzeugsitzes in 3-dimensionaler, schematischer Ansicht;
- Fig. 2: einer erste Schnittansicht der in Fig. 1 gezeigten Vorrichtung; und
- Fig. 3: einer zweite Schnittansicht der in Fig. 1 gezeigten Vorrichtung;

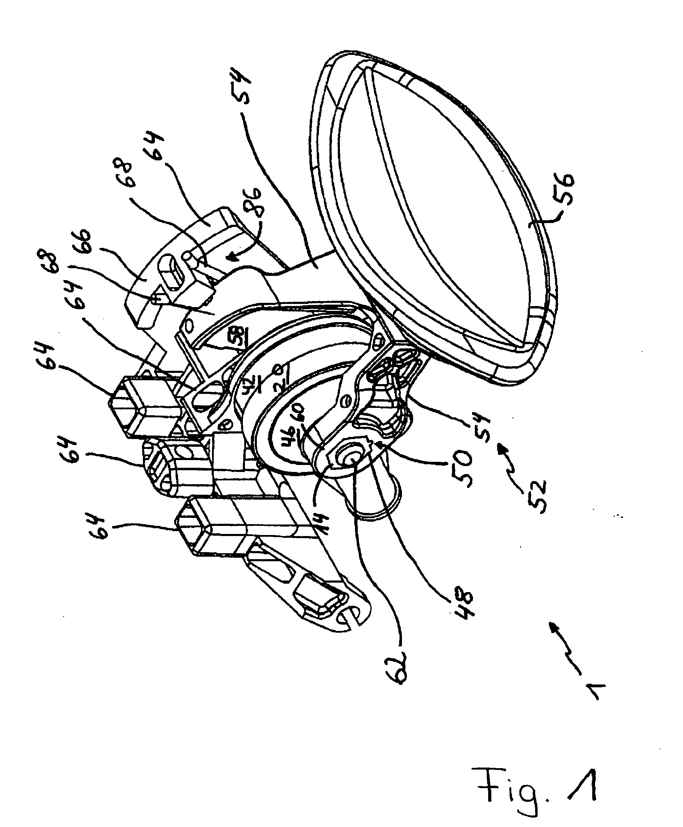

Die Fig. 1 bis 3 zeigen eine beispielhafte Ausführungsform einer erfindungsgemäßen Vorrichtung 1. Diese Vorrichtung 1 ist beispielsweise für eine Sitzhöhen-Verstelleinrichtung eines Fahrzeugsitzes vorgesehen, bzw. kann Bestandteil einer solchen sein.

Diese Vorrichtung weist ein in entgegengesetzte Drehrichtungen 10, 12 antreibbares Antriebselement 14 auf, sowie ein mittels dieses Antriebselements 14 in entgegengesetzte Drehrichtungen 16, 18 antreibbares Abtriebselement 20.

Das Antriebselement 14 ist als dreh- bzw. schwenkbewegliche Hohlwelle 22 ausgebildet, an der ein Flansch 24 ausgebildet wird. Dieser Flansch 24 weist eine im Wesentlichen kreisförmige Scheibe 26 auf, die im Wesentlichen konzentrisch zu der Hohlwelle 22 an dieser gehalten ist und an ihrem radial außen gelegenen Ende eine radial nach außen vorspringende Nase 28 aufweist.

An den Flansch 24 ist ein sich parallel zu Drehachse des Antriebselements 14 erstreckender Lagerbolzen 30 angeformt, vom welchem eine zweite Feder 32 aufgenommen wird, deren Funktion im Folgenden noch erläutert wird.

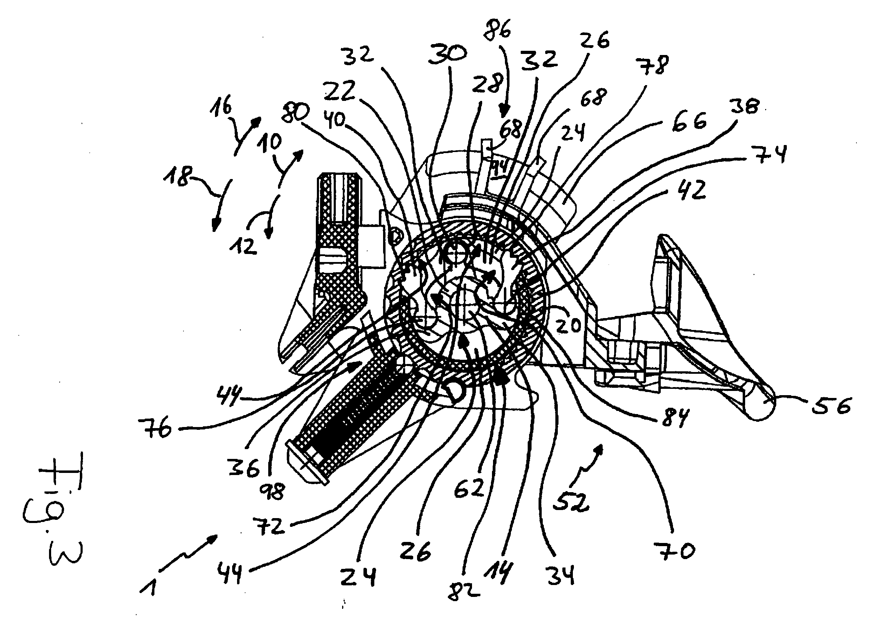

Ferner sind in den Flansch 24 zwei Öffnungen mit jeweils kreisförmigem Querschnitt eingebracht, deren Achsen jeweils parallel zur Drehachse des Antriebselements 14 verlaufen. Diese Öffnungen sind hier als Durchgangsöffnungen gestaltet. Diese beiden Öffnungen sind - wie gut in Fig. 3 zu erkennen ist -jeweils in einem radial außen gelegenen Bereich des Flansches 24 und - in Umfangsrichtung dieses Flansches 24 gesehen - um im Wesentlichen 180° bzw. ca. um 170° versetzt zueinander angeordnet, wobei der angesprochene Winkel auch andere Werte aufweisen kann. Auf der axialen Seite dieser Öffnungen, auf der sich der Lagerbolzen 30 von dem Flansch 24 erstreckt, schließt sich jeweils an diese Öffnungen - in Radialrichtung im Wesentlichen ohne Versatz - in Axialrichtung ein im Wesentlichen teilhohlzylindrischer, axial vorstehender Wandabschnitt 34 bzw. 36 an, der im Zusammenwirken mit den jeweils zugehörigen, vorerwähnten Öffnungen als Lagerstelle für jeweils eine Klinke 38 bzw. 40 dient, deren Funktion im Folgenden noch erläutert wird. Diese Wandabschnitte 34, 36 sind jeweils - wie gut Fig. 3 zeigt - (bezogen auf die Radialrichtung der Hohlwelle 22) mit ihrem radial innen gelegenen Bereich an die Hohlwelle 22 angeformt.

Das Abtriebselement 20 weist eine im Wesentlichen hohlzylindrische Mantelwand 42 auf, die auf ihrer radial innen gelegenen Seite eine (Innen-)Verzahnung 44 ausbildet. Diese Verzahnung 44, auf deren Funktion im Folgenden noch eingegangen wird, erstreckt sich in Umfangsrichtung der Mantelwand 42 gesehen über einen Winkel, der kleiner als 360° bzw. kleiner als 300° ist, und hier in etwa 270° beträgt.

Während die hohlzylindrische Mantelwand 42 an ihrem einen axialen Ende im Wesentlichen offen ist, bildet an dem gegenüberliegenden axialen Ende der Mantelwand 42 ein scheibenförmiges, an die Mantelwand 42 angeformtes Teil eine Stirnwand 46 des Abtriebselements 20 aus. In dieser Stirnwand 46 ist eine im Querschnitt kreisförmige Durchgangsöffnung vorgesehen, durch welche sich die Hohlwelle 22 erstreckt und an welcher sich die Hohlwelle 22 für die relativverschwenkbare Lagerung von Antriebselement 14 und Abtriebselement 20 abstützt. Das Antriebselement 14 ist in das Abtriebselement 20 eingesteckt. Dieses ist insbesondere so, dass sich ein freies Ende des Wandabschnitts 34 und / oder 36 und / oder des Lagerbolzens 30 auf der innen gelegenen Seite der Stirnwand 46 abstützt oder abstützen kann.

An dem aus dem Abtriebselement 20 durch die Durchgangsöffnung der Stirnwand ragenden Ende bzw. Endabschnitt weist die Hohlwelle 22 eine Drehmitnahme 48 auf, die hier nach Art eines Außensechskants ausgebildet ist und mit einer Riffelung 50 versehen ist.

Eine entsprechende Negativkontur dieses mit einer Riffelung 50 versehenen Außensechskants wird von einer entsprechenden Öffnung bzw. Durchgangsöffnung eines Betätigungselements bzw. einer Betätigungseinrichtung 52, die für das treibende Betätigen des Antriebselements 14 vorgesehen ist, ausgebildet, wobei die Hohlwelle 22 und das Betätigungselement bzw. die Betätigungseinrichtung 52 über den Eingriff dieser Konturen drehfest miteinander gekoppelt sind. Die Riffelung 50 erleichtert dabei die Montage in einer vorbestimmten Relativstellung. Diese Betätigungseinrichtung 52 weist ein gabelförmiges Teil 54 auf, an dem ein Betätigungsgriff 56 für die manuelle Betätigung angebracht ist, der als Fußbetätigungselement oder Handbetätigungselement gestaltet sein kann.

Das gabelförmige Teil 54 umgreift mit seinen zwei die Gabelform bestimmenden Flanschen 58, 60 axial das Abtriebselement 20 mit dem in dieses eingesteckten Antriebselement 14. Während die bereits angesprochene, eine Negativkontur des mit einer Riffelung 50 versehenen Außensechskants der Hohlwelle 22 ausbildende Öffnung der Betätigungseinrichtung 52 für die drehfeste Kopplung mit dem Antriebselement 14 an einem zweiten 60 der beiden Flansche 58, 60 vorgesehen ist, weist der erste 58 dieser beiden Flasche 58, 60 eine Durchgangsöffnung auf, die für die Bildung einer weiteren Lagerstelle für die Betätigungseinrichtung 52 vorgesehen ist.

Durch die Hohlwelle 22 mit dem davon getragenen zweiten Flansch 60 der Betätigungseinrichtung 52 sowie mit dem darauf aufgesteckten Abtriebselement 20 sowie durch die Durchgangsöffnung des ersten Flansches 58 ist eine Achse bzw. Welle 62 gesteckt.

Diese Achse bzw. Welle 62 ist in einem Gehäuse 64 gelagert. Anzumerken ist allerdings dass dieses Gehäuse 64 hier nicht als umhüllendes Gehäuse ausgebildet ist, was prinzipiell in alternativer Gestaltung auch der Fall sein kann. Das Gehäuse 64 ist vielmehr zur, insbesondere festen, Lagerung der Vorrichtung 1 an einem umgebenden, fest angeordneten Bauteil, wie Fahrzeugkarosserie bzw. Fahrzeugboden oder Fahrzeugsitz, insbesondere starres Bauteil der Fahrzeugsitzfläche, bestimmt, und wird vor diesem Hintergrund als Gehäuse 64 bezeichnet. Das Gehäuse 64 weist zwei im Zusammenwirken gabelförmige Flansche 66 auf (einer von diesen ist in den Figuren gut zu erkennen), in denen Durchgangsöffnungen für die Lagerung der Achse bzw. Welle 62, die sich folglich durch diese beiden Durchgangsöffnungen erstreckt, vorgesehen sind. Die durch die beiden Flansche 66 gebildete Gabelkontur umgreift - bezogen auf die Axialrichtung der Achse bzw. Welle 62 - axial den ersten Flansch 58 des gabelförmigen Teils 54 der Betätigungseinrichtung 52 sowie ein erstes Federelement 68, dessen Funktion im Folgenden noch näher erläutert wird.

Das Antriebselement 14 sowie das Abtriebselement 20 können relativ zueinander sowie gegenüber dem Gehäuse 64 um ihre Drehachse verschwenkt werden.

Die Vorrichtung 1 weist ferner einen ersten einseitig wirkenden Freilauf 70 und einen zweiten einseitig wirkenden Freilauf 72 auf. Diese beiden Freiläufe 70, 72 sind zwischen dem Antriebselement 14 und dem Antriebselement 20 angeordnet bzw. wirken zwischen dem Antriebselement 14 und dem Antriebselement 20. Das Abtriebselement 20 kann vom Antriebselement 20 wahlweise über den ersten 70 oder den zweiten 72 dieser beiden Freiläufe 70, 72 angetrieben werden. Diese beiden (jeweils) einseitig wirkenden Freiläufe 70, 72 sind derart gegenläufig angeordnet bzw. geschaltet bzw. verschaltet, dass die Sperrrichtung des ersten 70 dieser beiden Freiläufe 70, 72 der Freilaufrichtung des zweiten 72 dieser Freiläufe 70, 72 entspricht, und dass die Sperrrichtung des zweiten 72 dieser beiden Freiläufe 70, 72 der Freilaufrichtung des ersten 70 dieser Freiläufe 70, 72 entspricht.

Der erste einseitig wirkende Freilauf 70 weist eine erste federbelastete und schwenkbar gelagerte Rast- bzw. Sperr- bzw. Ratschenklinke bzw. Klinke 38 auf und der zweite einseitig wirkende Freilauf 72 weist eine zweite federbelastete und schwenkbar gelagerte Rast- bzw. Sperr- bzw. Ratschenklinke bzw. Klinke 40 auf.

Von der ersten Klinke 38 wird ein bolzenartiger Abschnitt 74 ausgebildet und von der zweiten Klinke 40 wird ein bolzenartiger Abschnitt 76 ausgebildet. Mit ihren jeweiligen bolzenartigen Abschnitten 74 bzw. 76, die sich jeweils im Wesentlichen parallel zur Drehachse des Antriebselements 14 erstrecken, sind diese Klinken 38, 40 jeweils schwenkbar an diesem Antriebselement 14 gelagert, und zwar an dessen Flansch 24 bzw. Scheibe 26. Hierzu wird der bolzenartige Abschnitt 74 bzw. 76 von der jeweiligen Einheit aus einer der bereits angesprochenen Durchgangsöffnungen mit dem jeweiligen sich hieran anschließenden im Wesentlichen teilhohlzylindrischen, axial vorstehenden Wandabschnitt 34 bzw. 36 aufgenommen.

Die Klinken 38 bzw. 40 bilden jeweils Zähne 78 bzw. 80 für das Zusammenwirken mit der Innenverzahnung 44 zur Bildung des ersten 70 bzw. zweiten einseitig wirkenden Freilaufs 72 aus. Wie bereits angesprochen sind die Klinken 38, 40 bzw. die beiden einseitig wirkenden Freiläufe 70, 72 jeweils federbelastet. Zu diesem Zweck belastet die bereits angesprochene, vom Lagerbolzen 30 aufgenommene zweite Feder 32 die Klinken 38, 40, und zwar insbesondere so, dass deren Zähne 78 bzw. 80 gegen die bzw. in die bzw. in Richtung der Innenverzahnung 44 gedrückt werden. Diese zweite Feder 32 wird hier von einem Federblech ausgebildet, das - insbesondere gekrümmt - um den angesprochenen Bolzen 30 gelegt ist und mit seinen beiden freien Enden, die beispielsweise abgekröpft sind, einerseits die erste Klinke 38 und andererseits die zweite Klinke 40 belastet.

Hierbei ist vorgesehen, dass bei einer antriebsseitigen, in Richtung der ersten Drehrichtung 10 wirkenden Drehmomentbelastung des Antriebsteils 14 bei entsprechend in die Innenbezahnung 44 eingreifenden Zähnen 78 bzw. 80 der erste Freilauf 70 in seiner Freilaufrichtung belastet wird, und der zweite Freilauf 72 in seiner Sperrrichtung belastet wird.

Ferner weist die Vorrichtung 1 eine Entriegelungseinrichtung 82 zum wahlweisen Außereingriff-Bringen jeweils eines der Freiläufe 70 bzw. 72 auf. Für die Ausbildung dieser Entriegelungseinrichtung 82 ist ein an dem Gehäuse 64 ausgebildeter haib-hohlzylindrische Kragen 84 vorgesehen. Dieser halb-hohlzylindrische Kragen 84 erstreckt sich radial innerhalb und in Umfangsrichtung der hohlzylindrischen Mantelwand 42 des Abtriebsteils 20 im Wesentlichen von der ersten Klinke 38 bis zur zweiten Klinke 40.

Wenn ausgehend von einer Neutralstellung des Antriebselements 14 dieses Antriebselement 14 in seiner Drehrichtung 10 bzw. 12 mit einem Drehmoment um seine Drehachse belastet wird, wird hierdurch - in Abhängigkeit dieser Drehrichtung 10 bzw. 12 - eine der Klinken 38 bzw. 40 derart gegen eine endseitige Stirnwand dieses Kragens 84 gedrückt, dass der entsprechende Freilauf 70 bzw. 72 automatisch außer Eingriff kommt, bzw. die entsprechende Klinke 38 bzw. 40 von der Innenverzahnung 44 abhebt, und zwar insbesondere gegen die Federkraft der zweiten Feder 32. Dabei ist insbesondere vorgesehen, dass sich der Kragen 84 radial zwischen die Verzahnung 44 und die Zähne 78 bzw. 80 der betreffenden Klinke 38 bzw. 40 schiebt. Die zweite Feder 32 stellt dabei eine Rückstellkraft bereit, die bewirkt, dass die betreffende Klinke 38 bzw. 40 bzw. der entsprechende Freilauf 70 bzw. 72 durch ein entsprechendes Zurückverschwenken des Antriebselements 14 automatisch wieder in Eingriff kommt. Das Zusammenwirken des Antriebselements 14 mit den Klinken 38, 40 und dem Kragen 84 ist dabei so, dass durch ein Verschwenken des Antriebselements 14 aus seiner Neutralstellung stets die Klinke 38 bzw. 40 desjenigen der beiden einseitig wirkenden Freiläufe 70 bzw. 72 mittels des Kragens 84 außer Eingriff gebracht wird, der dabei in seiner Freilaufrichtung belastet wird.

Durch das angesprochene, wahlweise jeweilige Verschwenken des Antriebselements 14 aus seiner Neutralstellung in eine der beiden Drehrichtungen 10, 12 wird dabei über den Freilauf 70 bzw. 72, der dabei nicht mittels der Entriegelungseinrichtung 82 bzw. deren Kragen 84 außer Eingriff gebracht wird, ein Drehmoment vom Antriebselement 14 auf das Abtriebselement 20 übertragen.

Die Neutralstellung des Antriebselements 14 ist dabei eine Drehstellung oder jeweilige Drehstellung des Antriebselements 14, in der beide Freiläufe 70, 72 in einer Eingriffsstellung sind bzw. mit ihren Zähnen 78 bzw. 80 die Innenverzahnung 44 kontaktieren.

Für das Antriebselement 14 ist eine Rückstelleinrichtung 86 vorgesehen. Diese Rückstelleinrichtung 86 wirkt derart, dass dann, wenn das Antriebselement 14 aus seiner Neutralstellung in einer beliebigen der Drehrichtungen 10 oder 12 ausgelenkt wird, eine in Richtung der Neutralstellung des Antriebselements 14 wirkende Rückstellkraft auf das Antriebselement 14 wirkt. Diese Rückstelleinrichtung 86 weist - in diesem Ausführungsbeispiel genau - ein erstes Federelement bzw. erste Feder 68 auf. Dieses erste Federelement 68 ist hier als Torsionsfeder gestaltet.

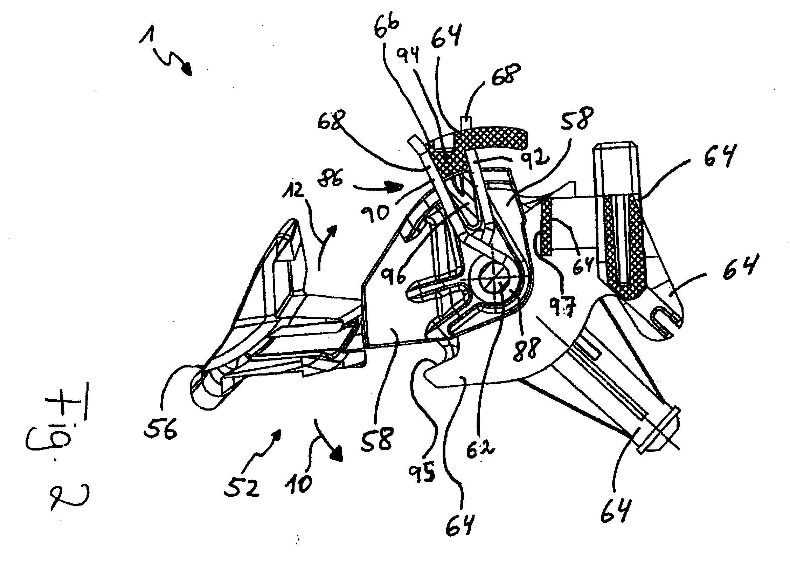

Das Federelement 68 ist beispielsweise aus Draht und weist hier mehrere Wicklungen 88 auf bzw. ist mehrfach gewickelt. Die freien Enden 90, 92 des Federelements 68 kreuzen sich und ragen von dem Bereich der Wicklungen 88 ab, und können sich beispielsweise gerade bzw. im Wesentlichen gerade erstrecken, was gut der Fig. 2 entnommen werden kann.

Das Federelement 68 wird von der sich durch dessen Wicklungen 88 erstreckenden Achse bzw. Welle 62 getragen. Bezogen auf die Axialrichtung dieser Achse bzw. Welle 62 ragt einerseits vom Gehäuse 64 - und zwar insbesondere von einem der beiden Flansche 66 diese Gehäuses 64 - und andererseits von dem bzw. der mit dem Antriebsteil 14 drehfest gekoppelten Betätigungselement bzw. Betätigungseinrichtung 52 jeweils ein sich axial erstreckender Vorsprung 94 bzw. 96 ab, wobei sich diese Vorsprünge 94 bzw. 96 axial überlappen. Bezogen auf die Radialrichtung der Achse bzw. Welle 62 sind diese Vorsprünge 94 bzw. 96 radial nebeneinander angeordnet.

Zur Ausbildung dieser Rückstelleinrichtung 86 für das Antriebselement 14 umgreifen - bevorzugt mit einer Vorspannung - die beiden freien Enden 90, 92 des Federelements 68 diese Vorsprünge 94 bzw. 96, so dass diese Vorsprünge 94 bzw. 96 - in Umfangsrichtung der Achse bzw. Welle 62 gesehen - zwischen diesen beiden freien Enden 90, 92 des Federelements 68 gefangen sind. In von außen unbelastetem Zustand stellt sich hierbei eine Relativstellung der Vorsprünge 94 bzw. 96 ein, die im Wesentlichen der Neutralstellung des Antriebselements 14 entspricht bzw. dieser Neutralstellung zugeordnet ist bzw. mit dieser Neutralstellung korrespondiert.

Wenn nun das Betätigungselement bzw. die Betätigungseinrichtung 52 bzw. der Betätigungsgriff 56 schwenkend in einer ihrer beiden Drehrichtungen 10, 12 von außen belastet wird, und somit über deren drehfeste Kopplung mit dem Antriebselement 14 dieses Antriebselement 14 verschwenkt wird, verschwenken auch die beiden Vorsprünge 94 bzw. 96 - in Umfangsrichtung der Achse bzw. Welle 62 gesehen - gegeneinander, wobei - in Abhängigkeit der Drehrichtung - eines der beiden freien Enden 90, 92 des ersten Federelements 68 an dem einen der beiden Vorsprünge 94 bzw. 96 und das andere der beiden freien Enden 90, 92 des ersten Federelements 68 an dem anderen der beiden Vorsprünge 94 bzw. 96 gehalten wird, so dass eine (mit zunehmendem Verdrehwinkel zunehmende) Rückstellkraft auf das Betätigungselement bzw. die Betätigungseinrichtung 52 und somit auf das Antriebselement 14 in Richtung der Neutralstellung des Antriebselements 14 wirkt. Bei Entlastung von dieser äußeren Belastung wird das Antriebselement 14 automatisch wieder in seine Neutralstellung zurückbewegt.

Für die Begrenzung der Verschwenkbarkeit des Antriebselements 14 in einer ersten 10 dieser beiden Drehrichtungen 10,12 (bzw. Orientierungen) ist ein erster Anschlag 95 vorgesehen und für die Begrenzung der Verschwenkbarkeit des Antriebselements 14 in der zweiten 12 dieser beiden Drehrichtungen 10, 12 (bzw. Orientierungen) dieses Antriebselements 14 ist ein zweiter Anschlag 97 vorgesehen.

Die Anschläge 95, 97 werden jeweils an dem Gehäuse 64 ausgebildet. Bei einem von der Neutralstellung ausgehenden Verschwenken des Betätigungselements bzw. der Betätigungseinrichtung 52 bzw. des Betätigungsgriffs 56 und somit- über die entsprechende drehfeste Kopplung mit dem Antriebselement 56 in einer beliebigen der beiden Drehrichtungen 10, 12 - wird - wie oben erläutert - mittels der Entriegelungseinrichtung 82 einer der Freiläufe 70, 72 außer Eingriff gebracht und über den anderen der Freiläufe 70, 72 vom Antriebselement 14 ein Drehmoment auf das Abtriebselement 20 übertragen, so dass das Abtriebselement 20 verschenkt wird. Dabei verschwenken ferner die beiden Vorsprünge 94 bzw. 96 gegeneinander und es baut sich infolgedessen eine zunehmende Rückstellkraft bzw. Rückstellmoment in der Rückstelleinrichtung 86 bzw. dem Federelement 68 auf.

Wenn - je nach Drehrichtung - eine Anschlagstellung an einem der Anschläge 95, 97 erreicht ist, wird ein fortgesetztes Verschenken bei gleichbleibender Drehrichtung 10 bzw. 12 blockiert. Ein Entlasten von der äußeren, das vorgenannte Verschenken bewirkenden Kraft bzw. Moment führt dazu, dass die Rückstelleinrichtung 86 das Antriebselement 14 zurück in seine Neutralstellung verbringt und somit beide Freiläufe 70, 72 wieder in einer Eingriffstellung sind. Bei diesem Zurückverschwenken in die Neutralstellung des Antriebselements 14 wird der Freilauf 70 bzw. 72, über den zuvor ein Drehmoment auf das Abtriebsteil 20 übertragen wurde, in seiner Freilaufrichtung bewegt.

Die Anzahl der Zähne, um die sich die Zähne 78 bzw. 80 der Klinke 38 bzw. 40 dabei in Umfangrichtung der Verzahnung 44 gegenüber den Zähnen der Verzahnung 44 verschieben, bzw. die überfahren werden, kann dabei durch entsprechend Wahl der Lage der Anschläge 95, 97 - insbesondere im Rahmen der Fertigung - gewählt werden.

Es kann in vorteilhafter Ausgestaltung vorgesehen sein, dass sich die Zähne dabei um eine Anzahl von Zähne gegeneinander verschieben, die vorbestimmt ist, und beispielsweise kleiner als vier ist. Besonders vorteilhaft ist, dass sich die Zähne dabei nur um einen Zahn gegeneinander verschieben, was eine besonders feinfühlige Einstellung ermöglicht. Bei dem Ausführungsbeispiel ist der Einstellschritt allerdings durch die Außenverzahnung des Abtriebselements 20 bzw. die Arretiereinrichtung 98 bzw. den bzw. die Teilung des außenverzahnungsartigen Abschnitt(s) der Arretiereinrichtung 98, der am Abtriebselement 20 vorgesehen ist, definiert. Der hierdurch definierte Einstellschritt kann beispielsweise 15° sein, aber auch abweichend vorbestimmt sein. Somit lässt sich beispielsweise bei einer Sitzhöhen-Verstelleinrichtung eine sehr feinfühlige Einstellung der Sitzhöhe erreichen, die wenig von den motorischen Fähigkeiten des Benutzers abhängig ist. Bei einer Sitzhöhen-Verstelleinrichtung kann beispielsweise vorgesehen sein, dass das Abtriebsteil 20 über Schnüre oder dergleichen die Verstellung der Sitzhöhe bewirkt.

Um das Abtriebselement 20 (in der gleichen Drehrichtung) um einen Winkel zu verschwenken, der größer als derjenige ist, der vom ihm überfahren wird, wenn das Antriebselement 14 von seiner Neutralstellung in eine Anschlagstellung an einem der Anschläge 95, 97 bewegt wird, kann das Antriebselement 14 mehrmals in Folge zwischen seiner Neutralstellung und seiner Anschlagstellung bezüglich des jeweils gleichen Anschlags 95 bzw. 97 hin- und herbewegt werden.

Der maximale Verstellbereich des Abtriebselements 20 kann auch beschränkt sein. Dieses ist im Ausführungsbeispiel gemäß den Figuren so, dass der Verstellbereich des Abtriebselements 20 über die Größe der Innenverzahnung 44 dieses Abtriebselements 20 definiert ist. Die Klinken 38, 40 können also nur innerhalb des verzahnten Bereichs (der Innenverzahnung 44) eingreifen, so dass außerhalb dieses verzahnten Bereichs (der Innenverzahnung 44) bei einer Betätigung ein Leerhub bewirkt wird.

Bei der in den Figuren gezeigten, beispielhaften Gestaltung ist ferner eine federbelastete Arretiereinrichtung 98 vorgesehen, die in definierten Stellungen des Abtriebselements 20 in einer arretierten Stellung ist. Hierzu kann vorgesehen sein, dass auf der Außenoberfläche der hohlzylindrischen Mantelwand 42 der Abtriebselements 20 umfangsmäßig beanstandete Vertiefungen eingebracht sind, und eine durch eine Feder belastete Kugel von radial außen gegen diese Außenoberfläche gedrückt wird, so dass sie in definierten Stellungen in jeweils eine der Vertiefungen eingreift. Anstelle einer federbelasteten Kugel kann beispielsweise auch ein Federblech vorgesehen sein, das einen zylindrisch geformten Eingriffsbereich für den Eingriff in die Vertiefungen ausbildet.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung für eine Sitzhöhen-Verstelleinrichtung eines Fahrzeugsitzes
- 10: erste Drehrichtung von 14
- 12: zweite Drehrichtung von 14
- 14: Antriebselement
- 16: erste Drehrichtung von 20
- 18: zweite Drehrichtung von 20
- 20: Abtriebselement
- 22: Hohlwelle von 20
- 24: Flansch von 20 an 22
- 26: Scheibe von 24
- 28: Nase an 26
- 30: Lagerbolzen für 32 an 26
- 32: zweite Feder
- 34: vorspringender teilhohlzylindrischer Wandabschnitt an 24
- 36: vorspringender teilhohlzylindrischer Wandabschnitt an 24
- 38: erste Klinke von 70
- 40: zweite Klinke von 72
- 42: hohlzylindrische Mantelwand von 20
- 44: Verzahnung an 42
- 46: Stirnwand von 20
- 48: Drehmitnahme an 22
- 50: Riffelung an 48
- 52: Betätigungselement bzw. einer Betätigungseinrichtung
- 54: gabelförmiges Teil von 52
- 56: Betätigungsgriff von 52
- 58: erster Flansch von 54
- 60: zweiter Flansch von 54
- 62: Achse bzw. Welle
- 64: Gehäuse
- 66: Flansche von 64
- 68: erstes Federelement von 86
- 70: erster einseitig wirkender Freilauf
- 72: zweiter einseitig wirkender Freilauf
- 74: bolzenartiger Abschnitt von 38
- 76: bolzenartiger Abschnitt von 40
- 78: Zähne von 38
- 80: Zähne von 40
- 82: Entriegelungseinrichtung
- 84: halb-hohlzylindrischer Kragen von 82
- 86: Rückstelleinrichtung für 14
- 88: Wicklungen von 68
- 90: freies Ende von 68
- 92: freies Ende von 68
- 94: Vorsprung
- 95: erster Anschlag
- 96: Vorsprung
- 97: zweiter Anschlag
- 98: federbelastete Arretiereinrichtung

## Patentansprüche

1. Vorrichtung für eine Sitzhöhen-Verstelleinrichtung eines Fahrzeugsitzes, wobei diese Vorrichtung aufweist:
- ein in entgegengesetzte Drehrichtungen (10, 12) antreibbares Antriebselement (14),
- ein mittels dieses Antriebselements (14) in entgegengesetzte Drehrichtungen (16, 18) antreibbares Abtriebselement (20),
- zwei einseitig wirkende Freiläufe (70, 72), wobei das Abtriebselement (20) über eine Innenverzahnung (44) vom Antriebselement (14) wahlweise über den ersten (70) oder den zweiten (72) dieser beiden Freiläufe (70, 72) antreibbar ist und wobei die Sperrdichtung des ersten (70) dieser Freiläufe (70, 72) der Freilaufrichtung des zweiten (72) dieser Freiläufe (70, 72) entspricht und wobei die Freilaufrichtung des ersten (70) dieser Freiläufe (70, 72) der Sperrrichtung des zweiten (72) dieser Freiläufe (70, 72) entspricht;
- eine Entriegelungseinrichtung (82) zum wahlweisen Außereingriff-Bringen jeweils eines der Freiläufe (70, 72), und
- ein Gehäuse (64),
wobei dem Antriebselement (14) eine Neutralstellung zugeordnet ist, und wobei diese Neutralstellung eine vorbestimmte Drehstellung des Antriebselements (14) ist, bei der sowohl der erste (70) als auch der zweite Freilauf (72) in einer Eingriffstellung ist, wobei
für das Antriebselement (14) eine bei einem Auslenken des Antriebselements (14) in Richtung der Neutralstellung wirkende Rückstelleinrichtung (86) vorgesehen ist, und dass für die Begrenzung der Verschwenkbarkeit des Antriebselements (14) in seiner ersten Drehrichtung (10) ein erster Anschlag (95) und für die Begrenzung der Verschwenkbarkeit des Antriebselements (14) in seiner zweiten, der ersten (10) entgegengesetzten, Drehrichtung (12) ein zweiter Anschlag (97) vorgesehen ist, wobei der erste Anschlag (95) und der zweite Anschlag (97) an diesem Gehäuse (64) getrennt voneinander ausgebildet sind und **dadurch gekennzeichnet, dass** eine Arretiereinrichtung (98) zum Zusammenwirken mit einer Außenverzahnung des Abtriebselements (20) vorgesehen ist.

2. Vorrichtung nach Anspruch 1,
**dadurch gekennzeichnet,dass**
die Verschwenkbarkeit des Antriebselements (14) mittels des ersten (95) und des zweiten Anschlags (97) derart begrenzt ist, dass der Verschwenkwinkel, den das vom Antriebselement (14) getriebene Abtriebselement (20) bei einem Verschwenken des Antriebselements (14) von seiner durch den ersten Anschlag (95) bestimmten Anschlagstellung zu seiner durch den zweiten Anschlag (97) bestimmten Anschlagstellung, oder umgekehrt, überfährt, kleiner als der maximale Verschwenkwinkel des Abtriebselements (20) ist, der von dem Abtriebselement (14) durch treibende Belastung des Antriebselement (14) überfahrbar ist.

3. Vorrichtung nach einem der vorangehenden Ansprüche,
**dadurch gekennzeichnet, dass**
ein Gehäuse (64) vorgesehen ist, gegenüber welchem sowohl das Antriebselement (14) als auch das Abtriebselement (20) verschwenkbar ist, wobei der erste Anschlag (95) und der zweite Anschlag (97) jeweils an diesem Gehäuse (64) ausgebildet werden.

4. Vorrichtung nach einem der vorangehenden Ansprüche,
**dadurch gekennzeichnet,dass**
die Rückstelleinrichtung (86) wenigstens ein erstes Federelement (68) aufweist.

5. Vorrichtung nach Anspruch 4,
**dadurch gekennzeichnet, dass**
die Rückstelleinrichtung (86) genau ein, insbesondere als Torsionsfeder gestaltetes,
Federelement (68) aufweist, mittels welchem bei einer Auslenkung des Antriebselements (14) aus seiner Neutralstellung in einer beliebigen der beiden Drehrichtungen (10, 12) dieses Antriebselements (14) eine jeweils in Richtung der Neutralstellung des Antriebselements (14) gerichtete Rückstellkraft erzeugt wird.

6. Vorrichtung nach einem der vorangehenden Ansprüche,
**dadurch gekennzeichnet, dass**
der erste einseitig wirkende Freilauf (70) eine erste federbelastete Klinke (38) aufweist und dass der zweite einseitig wirkenden Freilauf (72) eine zweite federbelastete Klinke (40) aufweist.

7. Vorrichtung nach Anspruch 6,
**dadurch gekennzeichnet, dass**
an dem Abtriebselement (20) eine Innenverzahnung (44) ausgebildet wird und dass die erste federbelastete Klinke (38) für die Bildung des ersten einseitig wirkenden Freilaufs (70) mit dieser Innenverzahnung (44) zusammenwirkt sowie die zweite federbelastete Klinke (40) für die Bildung des zweiten einseitig wirkenden Freilaufs (72) mit dieser Innenverzahnung (44) zusammenwirkt.

8. Vorrichtung nach einem der vorangehenden Ansprüche,
**dadurch gekennzeichnet, dass**
die Entriegelungseinrichtung (82) derart mit dem Antriebselement(14) zusammenwirkt, dass durch ein Verschwenken des Antriebselements (14) aus seiner Neutralstellung automatisch und in Abhängigkeit der Schwenkrichtung (10 bzw. 12) dieses Antriebselements (14) einer der beiden Freiläufe (70, 72) außer Eingriff kommt und dass dieser betreffende Freilauf (70 bzw. 72) durch ein Zurückschwenken des Antriebselements (14) in dessen Neutralstellung automatisch wieder in Eingriff kommt.

9. Vorrichtung nach Anspruch 8,
**dadurch gekennzeichnet, dass**
der Abstand des ersten Anschlags (95) von der Neutralstellung des Antriebselements (14) und der Abstand des zweiten Anschlags (97) von der Neutralstellung des Antriebselements (14) jeweils so dimensioniert ist, dass der oder jeder Zahn (78 bzw. 80) der Klinke (40 bzw. 38) des anderen, sich bei diesem Verschwenken des Antriebselements (14) in einer Eingriffsstellung befindenden Freilaufs (70 bzw. 72) bei diesem Zurückschwenken eine Anzahl von Zähnen der Innenverzahnung (44) in seiner Freilaufrichtung überfährt, die kleiner als vier, und vorzugsweise gleich eins ist, wenn das Antriebselement (14) bei diesem Verschwenken bis in eine Anschlagstellung an einen dieser Anschläge (95, 97) verschwenkt wurde.

10. Vorrichtung nach einem der vorangehenden Ansprüche,
**dadurch gekennzeichnet, dass** eine federbelastete Arretiereinrichtung (98) vorgesehen ist, die in definierten Stellungen
des Abtriebselements (20) in einer arretierten Stellung ist.

11. Fahrzeugsitz mit einer Sitzhöhen-Verstelleinrichtung für die Sitzhöhenverstellung dieses Fahrzeugsitzes,
**dadurch gekennzeichnet,dass**
diese Sitzhöhen-Verstelleinrichtung eine Vorrichtung (1) gemäß einem der vorangehenden Ansprüche aufweist.

## Claims

1. Device for a seat height adjustment means of a vehicle seat, wherein this device comprises
- a drive element (14) which can be driven in opposite directions of rotation (10, 12),
- a driven element (20) which can be driven in opposite directions of rotation (16, 18) by means of this drive element (14),
- two unilaterally acting freewheels (70, 72), wherein the driven element (20) can be driven via an inner toothing (44) by the drive element (14) optionally via the first (70) or the second (72) of these two freewheels (70, 72), and wherein the locked direction of the first (70) of these freewheels (70, 72) corresponds to the free running direction of the second (72) of these freewheels (70, 72), and wherein the free running direction of the first (70) of these freewheels (70, 72) corresponds to the locked direction of the second (72) of these freewheels (70, 72),
- an unlocking device (82) for optionally bringing in each case one of the freewheels (70, 72) out of engagement, and a housing (64),
wherein a neutral position is assigned to the drive element (14), and wherein this neutral position is a predefined rotation position of the drive element (14) in which both the first (70) and the second freewheel (72) is in an engaged position,
wherein a restoring device (86) is provided for the drive element (14) which acts in the direction of the neutral position when the drive element (14) is deflected, and in that a first stop (95) is provided for limiting the pivotability of the drive element (14) in its first direction of rotation (10) and a second stop (97) is provided for limiting the pivotability of the drive element (14) in its second direction of rotation (12), which is opposite to the first (10), wherein the first stop (95) and the second stop (97) are formed separately from one another on this housing (64) **characterised in that** an arresting device (98) is provided for cooperating with an outer toothing of the driven element (20).

2. Device according to claim 1, **characterised in that** the pivotability of the drive element (14) is limited by means of the first (95) and the second stop (97) in such a way that the pivot angle which is travelled through by the driven element (20) driven by the drive element (14) as the drive element (14) pivots from its stop position defined by the first stop (95) to its stop position defined by the second stop (97), or vice versa, is smaller than the maximum pivot angle of the driven element (20) which can be travelled through by the driven element (14) due to a driving load of the drive element (14).

3. Device according to one of the preceding claims, **characterised in that** a housing (64) is provided, with respect to which both the drive element (14) and the driven element (20) can be pivoted, wherein the first stop (95) and the second stop (97) are in each case formed on this housing (64).

4. Device according to one of the preceding claims, **characterised in that** the restoring device (86) has at least a first spring element (68).

5. Device according to claim 4, **characterised in that** the restoring device (86) has precisely one spring element (68) designed in particular as a torsion spring, by means of which, when the drive element (14) is deflected out of its neutral position in either of the two directions of rotation (10, 12) of this drive element (14), a restoring force respectively oriented in the direction of the neutral position of the drive element (14) is generated.

6. Device according to one of the preceding claims, **characterised in that** the first unilaterally acting freewheel (70) has a first spring-loaded pawl (38), and **in that** the second unilaterally acting freewheel (72) has a second spring-loaded pawl (40).

7. Device according to claim 6, **characterised in that** an inner toothing (44) is formed on the driven element (20), and **in that** the first spring-loaded pawl (38) cooperates with this inner toothing (44) for forming the first unilaterally acting freewheel (70) and the second spring-loaded pawl (40) cooperates with this inner toothing (44) for forming the second unilaterally acting freewheel (72).

8. Device according to one of the preceding claims, **characterised in that** the unlocking device (82) cooperates with the drive element (14) in such a way that a pivoting of the drive element (14) out of its neutral position automatically brings one of the two freewheels (70, 72) out of engagement, depending on the direction of pivoting (10 or 12) of this drive element (14), and **in that** this respective freewheel (70 or 72) is automatically brought back into engagement by pivoting the drive element (14) back into its neutral position.

9. Device according to claim 8, **characterised in that** the distance of the first stop (95) from the neutral position of the drive element (14) and the distance of the second stop (97) from the neutral position of the drive element (14) is in each case dimensioned such that the or each tooth (78 or 80) of the pawl (40 or 38) of the other freewheel (70 or 72) which is in an engaged position during this pivoting of the drive element (14) moves over a number of teeth of the inner toothing (44) in its free running direction which is less than four and preferably equal to one when the drive element (14) during this pivoting has been pivoted as far as a stop position against one of these stops (95, 97).

10. Device according to one of the preceding claims, **characterised in that** a spring-loaded arresting device (98) is provided, which is in an arrested position in defined positions of the driven element (20).

11. Vehicle seat with a seat height adjustment means for seat height adjustment of this vehicle seat, **characterised in that** this seat height adjustment mechanism comprises a device (1) according to one of the preceding claims.

## Revendications

1. Dispositif pour une installation de réglage de la hauteur d'un siège de véhicule, lequel dispositif présente :
- un élément menant (14) pouvant être mené dans des sens de rotation opposés (10, 12),
- un élément mené (20) pouvant être mené au moyen de cet élément menant (14) dans des sens de rotation opposés (16, 18),
- deux roues libres à action unilatérale (70, 72), où l'élément mené (20) peut être mené par l'élément menant (14) via un engrenage intérieur (44), au choix via la première (70) ou la seconde (72) de ces deux roues libres (70, 72), et où le sens de blocage de la première (70) de ces roues libres (70, 72) correspond au sens de roue libre de la seconde (72) de ces roues libres (70, 72), et où le sens de roue libre de la première (70) de ces roues libres (70, 72) correspond au sens de blocage de la seconde (72) de ces roues libres (70, 72),
- un dispositif de déverrouillage (82) pour la mise hors de prise au choix de respectivement l'une des roues libres (70, 72) et
- un boîtier (64),
dans lequel on a attribué à l'élément menant (14) une position neutre et dans lequel cette position neutre est une position de rotation prédéterminée de l'élément menant (14) dans laquelle aussi bien la première (70) que la seconde roue libre (72) se trouvent dans une position de mise en prise, dans lequel on a prévu, pour l'élément menant (14), un dispositif de rappel (86) agissant en direction de la position neutre lors d'une déviation de l'élément menant (14), et dans lequel on a prévu, pour la délimitation de la capacité de basculement de l'élément menant (14) dans son premier sens de rotation (10), une première butée (95), et pour la délimitation de la capacité de basculement de l'élément menant (14) dans son second sens de rotation (12), opposé au premier sens (10), une seconde butée (97), dans lequel la première butée (95) et la seconde butée (97) sont réalisées séparément l'une de l'autre sur ce boîtier (64), et **caractérisé en ce qu'**on a prévu un dispositif d'arrêt (98) destiné à coopérer avec un engrenage extérieur de l'élément mené (20).

2. Dispositif selon la revendication 1, **caractérisé en ce que** la capacité de basculement de l'élément menant (14) au moyen de la première butée (95) et de la seconde butée (97) est délimité de telle sorte que l'angle de basculement, que parcourt l'élément mené (20) mené par l'élément menant (14) lors d'un basculement de l'élément menant (14) de sa position de butée déterminée par la première butée (95) à sa position de butée déterminée par la seconde butée (97) ou inversement, est inférieur à l'angle de basculement maximal de l'élément mené (20) qui peut être parcouru par l'élément mené (20) par une sollicitation motrice de l'élément menant (14).

3. Dispositif selon l'une quelconque des revendications précédentes, **caractérisé en ce qu'**on a prévu un boîtier (64) par rapport auquel tant l'élément menant (14) que l'élément mené (20) peuvent être basculés, dans lequel la première butée (95) et la seconde butée (97) sont respectivement réalisées sur ce boîtier (64).

4. Dispositif selon l'une quelconque des revendications précédentes, **caractérisé en ce que** le dispositif de rappel (86) présente au moins un premier élément à ressort (68).

5. Dispositif selon la revendication 4, **caractérisé en ce que** le dispositif de rappel (86) présente précisément un élément à ressort (68), réalisé en particulier sous forme de ressort à torsion, au moyen duquel, lors d'une déviation de l'élément menant (14) de sa position neutre dans l'un privilégié des deux sens de rotation (10, 12) de cet élément menant (14), est produite une force de rappel respectivement orientée en direction de la position neutre de l'élément menant (14).

6. Dispositif selon l'une quelconque des revendications précédentes, **caractérisé en ce que** la première roue libre à action unilatérale (70) présente un premier cliquet (38) soumis à l'action d'un ressort, et **en ce que** la seconde roue libre à action unilatérale (72) présente un second cliquet (40) soumis à l'action d'un ressort.

7. Dispositif selon la revendication 6, **caractérisé en ce qu'**un engrenage intérieur (44) a été réalisé sur l'élément mené (20), et **en ce que** le premier cliquet (38) soumis à l'action d'un ressort coopère avec cet engrenage intérieur (44) pour la formation de la première roue libre à action unilatérale (70) et le second cliquet (40) soumis à l'action d'un ressort coopère avec cet engrenage intérieur (44) pour la formation de la seconde roue libre à action unilatérale (72).

8. Dispositif selon l'une quelconque des revendications précédentes, **caractérisé en ce que** le dispositif de déverrouillage (82) coopère avec l'élément menant (14) de telle sorte qu'un basculement de l'élément menant (14) hors de sa position neutre met hors de prise l'une des deux roues libres (70, 72) automatiquement et en fonction du sens de basculement (10 ou 12) de cet élément menant (14), et **en ce qu'**un basculement-retour de l'élément menant (14) dans sa position neutre remet automatiquement en prise la roue libre concernée (70 ou 72).

9. Dispositif selon la revendication 8, **caractérisé en ce que** la distance entre la première butée (95) et la position neutre de l'élément menant (14) et la distance entre la seconde butée (97) et la position neutre de l'élément menant (14) sont respectivement dimensionnées de telle sorte que la ou chaque dent (78 ou 80) du cliquet (40 ou 38) du roue libre (70 ou 72) se trouvant dans une position de mise en prise lors de ce basculement de l'élément menant (14) parcourt, lors de ce basculement-retour, un certain nombre de dents de l'engrenage intérieur (44) dans son sens de roue libre, nombre qui est inférieur à quatre, et est de préférence égal à un, lorsque l'élément menant (14) a été basculé, lors de ce basculement, jusque dans une position de butée contre l'une de ces butées (95, 97).

10. Dispositif selon l'une quelconque des revendications précédentes, **caractérisé en ce qu'**est prévu un dispositif d'arrêt (98) soumis à l'action d'un ressort, dispositif qui est dans une position arrêtée lorsque l'élément mené (20) se trouve dans des positions définies.

11. Siège de véhicule avec une installation de réglage de la hauteur d'un siège pour régler la hauteur de ce siège de véhicule, **caractérisé en ce que** cette installation de réglage de la hauteur d'un siège présente un dispositif (1) selon l'une quelconque des revendications précédentes.
